# EUROPEAN PATENT APPLICATION

(11) **EP 4 848 122 A1**
(43) Date of publication of application: **02.12.2026**
(21) Application number: 26177090.3
(22) Date of filing: 07.05.2026
(51) Int. Cl.: G06F 21/56, G06F 9/455, H04L 9/08, H04L 9/14

(54) **MALICIOUS SOFTWARE DETECTION AND RECOVERY USING INTERCEPTED ENCRYPTION KEYS**

(30) Priority: 29.05.2025 US 202519222871
(71) Applicant: VMware LLC, Palo Alto, CA 94304 (US)
(72) Inventor: Mirgorodskiy, Aleksandr, San Mateo, 94402 (US); Wang, Zhe, Saratoga, 95070 (US); Venkitachalam, Ganesh, Palo Alto, 94303 (US); Rugina, Radu, Sunnyvale, 94086 (US)
(74) Representative: Dilg, Haeusler, Schindelmann Patentanwaltsgesellschaft mbH

(57) **Abstract**

A host computer is configured to recover host data encrypted on the host computer by malicious software, by performing the steps of: programming a processor of the host computer to raise interrupts based on the execution of encryption instructions; inspecting encryption instructions of the malicious software in response to a plurality of interrupts raised by the processor, to identify data encryption keys used by the encryption instructions of malicious software for encrypting the host data; and decrypting the encrypted host data using the identified data encryption keys.

## Description

### Background

Computer systems, networks, and devices are often attacked by malicious software, also referred to as "malware." Malware is software intentionally designed to damage, disrupt, or gain unauthorized access, often with the goal of stealing data, disrupting operations, or otherwise causing harm. Some types of malware such as ransomware, certain wipers, and certain spyware, encrypt data, e.g., to render it unusable to victims. In the case of ransomware, for example, once data is encrypted, attackers may extort money from the victims in exchange for decrypting the data. Computers today struggle to detect malware until it is too late. For example, in the case of ransomware, detection approaches may include searching for indirect signs of attacks such as occurrences of many writes to storage with a high entropy. By the time such detection is made, a significant amount of data may be encrypted and unusable absent payment to cybercriminals.

Some computers periodically generate snapshots of files, which include point-in-time copies of the contents, structures, and metadata of the files. In response to malicious behavior of malware, such computers may "roll back" to previous snapshots, thus restoring previous versions of files. However, even with the option of rolling back to a previous snapshot, significant expenses may be incurred, including loss of recent data and significant service downtime during roll back. Accordingly, more effective approaches to detecting and recovering from such malicious behavior are desired.

### Summary

One or more embodiments provide a host computer including a processor and memory, wherein the processor executes instructions stored in the memory to recover host data encrypted on the host computer by malware. By executing such instructions, the host computer performs the steps of: programming the processor to raise interrupts based on the execution of encryption instructions; inspecting encryption instructions of the malware in response to a plurality of interrupts raised by the processor, to identify data encryption keys used by the encryption instructions of the malware for encrypting the host data; and decrypting the encrypted host data using the identified data encryption keys.

Further embodiments include a method comprising the above steps and a non-transitory computer-readable medium comprising instructions that cause a host computer to carry out the above steps.

### Brief Description of the Drawings

Figure 1 is a block diagram of a host computer in which embodiments may be implemented.
Figure 2 is a flow diagram of a method that may be performed by the host computer to detect and recover from a malware attack, according to some embodiments.
Figure 3 is a block diagram of an example of files that have been encrypted by malware.
Figure 4 is a flow diagram of a method that may be performed by the host computer to match encrypted file data to data encryption keys used by malware, according to some embodiments.
Figure 5 is an example of a table that may be used by some embodiments to associate data encryption keys with data that has been encrypted by using the data encryption keys.
Figure 6 is an example of a table that may be used by some embodiments to associate data encryption keys with offsets at which encrypted data is stored.
Figure 7 is a flow diagram of a method that may be performed by the host computer to determine locations in storage at which encrypted data is stored, according to some embodiments.

### Detailed Description

Techniques are described for detecting and recovering from malicious behavior of malware such as ransomware. According to embodiments, a processor may raise interrupts based on the execution of encryption instructions. As used herein, an "interrupt" is a signal or event that causes a processor or processing unit to temporarily halt its current execution flow in order to address another condition requiring immediate attention. "Encryption instructions" are software instructions configured to cause a computer to perform encryption operations on data, potentially utilizing cryptographic algorithms such as advanced encryption standard (AES) and optionally leveraging hardware-based acceleration such as AES new instructions (AES-NI).

If the processor raises interrupts in response to software (including malware) issuing encryption instructions, then the execution flow of that software is halted, and as part of "handling" those interrupts, the encryption instructions may be intercepted to determine data encryption keys. Data encryption keys are pieces of information used for encoding or decoding data. For example, the data encryption keys may be "symmetric." A symmetric data encryption key can be used to encrypt data and subsequently decrypt that same data.

By inspecting the encryption instructions directly, techniques are able to effectively distinguish between malicious behavior and benign behavior. For example, techniques are able to identify if data encryption keys used for encrypting data are constantly being changed, e.g., at a rate that exceeds a threshold. Such behavior may indicate malicious behavior, especially if data that is being encrypted is also being written to disk as opposed to be transmitted across a network, e.g., using Hypertext Transfer Protocol Secure (HTTPS). Indeed, while it is common for multiple data encryption keys to be used for benign purposes when securing data transmitted across a network, in benign cases of writing data to disk, data encryption keys are rarely changed. In other words, when data is being encrypted using frequently-changing data encryption keys, it is more likely to be for malicious purposes if the encrypted data is then being written to disk.

If data is encrypted maliciously, techniques disclosed herein are able to decrypt the data using the data encryption keys identified from the encryption instructions. Accordingly, embodiments may allow for recovering from attacks such as from ransomware without paying cybercriminals and without losing recent data by rolling back to a previous snapshot. These and further aspects of the invention are discussed below with respect to the drawings.

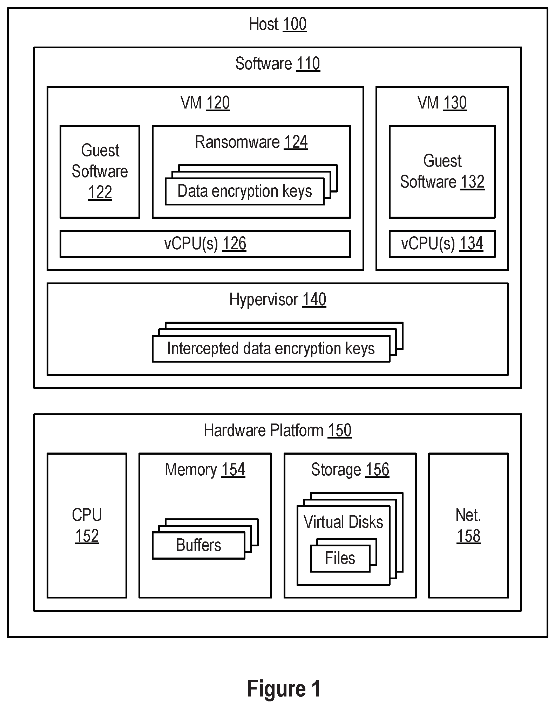

Figure 1 is a block diagram of a host computer 100, referred to herein simply as a "host," in which embodiments may be implemented. Host 100 is constructed on a hardware platform 150 such as an x86 architecture platform. Hardware platform 150 includes components of a computer, such as a central processing unit (CPU) 152, memory 154 such as random-access memory (RAM), local storage 156 such as one or more magnetic drives or solid-state drives (SSDs), and networking hardware 158 such as one or more network interface controllers (NICs). CPU 152 is configured to execute instructions such as executable instructions that perform one or more operations described herein, which may be stored in memory 154. Using networking hardware 158, host 100 may communicate with other devices (not shown) over a network such as a local area network (LAN) and wide area network (WAN).

Hardware platform 150 supports software 110. Software 110 may include a hypervisor 140, which is a software layer or component that supports the execution of multiple VMs, including VMs 120 and 130. One example of hypervisor 140 is a VMware ESX^{®} hypervisor, available from VMware LLC. A VM is a software emulation of a host including its own guest operating system (OS) that may support one or more workloads. VMs share the hardware resources of the hosts on which they execute, including the processing, memory, storage, and networking resources. A VM is an example of a virtualized computing instance, which is an addressable data compute node (DCN) or isolated user space instance.

Although the disclosure is described with reference to VMs, the teachings herein also apply to other types of virtualized computing instances such as containers. Additionally, although the disclosure is described with reference to virtualized computing instances, the teachings herein also apply to nonvirtualized computers. Accordingly, unless suggested otherwise, techniques described as being performed by hypervisor 140 may instead be performed by a non-virtualized OS running directly on a hardware platform.

In the virtualized example illustrated in Figure 1, VMs 120 and 130 include one or more virtual CPUs (vCPUs) 126 and one or more vCPUs 134, respectively, which are provisioned from CPU 152 by hypervisor 140. A vCPU is a logical abstraction of a physical CPU core, providing a time slice or portion of the CPU's processing power for executing tasks. VMs 120 and 130 further includes guest software 122 and 132, respectively, which are instances of software being run for benign purposes. For example, guest software 122 and 132 may each be an application or a portion of an application, an application being a computer program that may be launched on a computer system, such as for email services or office productivity services.

In the example of Figure 1, VM 120 further includes ransomware 124 as an example of malware, i.e., VM 120 has been attacked by ransomware 124. Ransomware 124 uses data encryption keys for encrypting data of VM 120 in storage 156 such as files of its virtual disk. Each VM of host 100 may utilize its own virtual disk in storage 156. A virtual disk is itself a file that reproduces the function of a storage device, the virtual disk including a file system for storing a VM's files. For example, a virtual disk can emulate a magnetic drive or SSD. It should be noted that ransomware 124 may encrypt entire files to render such files unusable, which is referred to herein as "full encryption." Alternatively, ransomware 124 may only partially encrypt files to save time, which is referred to herein as "partial encryption." Like full encryption, partial encryption may render files unusable to a user of VM 120. When files are referred to herein as being encrypted, it should be understood that such encryption may be either full or partial.

It should also be noted that although embodiments are discussed throughout with respect to files stored locally in storage 156, embodiments are not limited to local file-level encryption. In certain scenarios, malicious software such as ransomware 124 may encrypt other forms of data or storage structures such as a raw disk or disk partition. A file is a discrete collection of data recognized and managed by a file system, typically associated with a file name and metadata. A raw disk refers to the low-level binary contents of a storage device, which may include data not yet associated with any file system. A disk partition refers to a logically separated section of a physical storage device, which may contain one or more file systems, boot records, or other system-level information. Furthermore, any of such forms of data or storage structures may reside in, or be accessible through, external storage resources, including but not limited to storage arrays, networked-attached storage (NAS), cloud-based storage systems, or remote file servers. Any of the above data, including files, raw disks, and disk partitions, persisted locally or externally, is referred to herein as "host data."

As just one example, ransomware 124 may encrypt files according to AES, and ransomware 124 may use 128-bit, 192-bit, or 256-bit symmetric data encryption keys. Ransomware 124 may also use specialized processor instructions from the AES set such as AES-NI to perform AES encryption more quickly. For example, such encryption may include loading data from the files into buffers in memory 154, encrypting that data, and then replacing the original data in storage 156 with the encrypted data. Continuing the example of AES-NI, ransomware 124 may perform such encryption at the level of 16-byte blocks, performing the encryption over each of such blocks over 10, 12, or 14 rounds. To do so, ransomware 124 may generate a "master key" and derive "round keys" from the master key using a "key expansion process." Ransomware 124 may use the master key in a first round of encryption and then use different round keys in subsequent rounds. An instruction used to perform a last round of encryption for a data block being processed, e.g., under an AES-NI encryption operation, is referred to herein as a "last-round encryption instruction," and the round key used by a last-round encryption instruction is referred to as a "last-round key."

As discussed further below, hypervisor 140 may program CPU 152 to raise interrupts in response to encryption instructions. According to embodiments in which host 100 is virtualized, in response to each interrupt, hypervisor 140 gains control of a vCPU of the interrupted VM, e.g., one of vCPU(s) 126 when VM 120 is interrupted. In particular, host 100 transfers control of a vCPU from the guest OS of an interrupted VM to hypervisor 140. Hypervisor 140 may then handle the interrupt by performing a series of actions to respond to and manage the interrupt. According to embodiments, such actions include inspecting at least one encryption instruction of the interrupted VM. Such encryption instruction may include, as an operand, a data encryption key used for encrypting file data of the interrupted VM. After responding to the interrupt, host 100 transfers control of the vCPU back to the guest OS of the interrupted VM.

According to some embodiments, in response to each interrupt, hypervisor 140 emulates a plurality of encryption instructions of an interrupted VM. As used herein, when hypervisor 140 "emulates" an instruction of an interrupted VM, it means that hypervisor 140 intercepts and transforms the instruction, e.g., through binary translation, so that the instruction can be safely executed by hypervisor 140, and that hypervisor 140 then executes the transformed instruction. When hypervisor 140 emulates an instruction, it does so in a way that makes the instruction appear later to the interrupted VM as though it was executed directly by the VM. Emulating the encryption instructions causes files, or at least portions thereof, to be encrypted.

For example, hypervisor 140 may emulate a plurality of encryption instructions before control of a vCPU is returned to an interrupted VM. Emulating a plurality of encryption instructions may avoid unnecessarily slowing down the interrupted VM by reducing the number of interrupts raised in response to encryption instructions. This is especially desirable in cases where encryption instructions are being issued for benign purposes, e.g., by guest software 122 or 132.

As used herein, whether encryption instructions of a VM are executed by CPU 152 in the context of that VM or in the context of hypervisor 140 while the VM is interrupted, file data is referred to as having being encrypted by the VM, e.g., by ransomware 124. The context of a VM, also referred to herein as the "guest context," refers to the state (e.g., registers, memory contents, and configuration settings) and environment (e.g., system resources and privilege level) in which that VM operates while executing instructions. The context of hypervisor 140, also referred to herein as the "hypervisor context," refers to the state (e.g., control registers, memory mappings, and configuration parameters) and environment (e.g., system resources and privilege level) in which hypervisor 140 operates while executing instructions.

As discussed earlier, hypervisor 140 may inspect various encryption instructions including data encryption keys as operands. Continuing the example of AES-NI, each time an interrupt occurs, if the current encryption instruction is for the last round of encryption, hypervisor 140 may identify a last-round key directly from the encryption instruction and may perform transformations on the last-round key to derive all the other round keys and master key. If the current encryption instruction is not for the last round of encryption, hypervisor 140 may trace forward through encryption instructions, executing such encryption instructions in the hypervisor context, to the last round. Hypervisor 140 may then perform the same process of identifying the last-round key and performing the transformations to derive all the other round keys and master key.

There are various methods by which hypervisor 140 may program CPU 152 to raise interrupts to identify last-round keys. As a first example, hypervisor 140 may program CPU 152 to increment a programmable performance monitoring counter therein in response to executing encryption instructions, and to raise an interrupt based on a value of the performance monitoring counter. As used herein, a "programmable performance monitoring counter," sometimes referred to herein simply as a "performance monitoring counter," is a hardware register within a processor configured to count system or processor-related events, e.g., for monitoring purposes. For example, each time the value of the performance monitoring counter overflows, such overflowing may cause CPU 152 to raise an interrupt. Hypervisor 140 may then identify the last-round key and derive all the other round keys and master key.

As another example building on the first example, each time an interrupt is raised based on the value of the performance monitoring counter, hypervisor 140 may insert an instruction breakpoint in code of a process such as guest software 122 or ransomware 124. An instruction breakpoint is a type of hardware breakpoint that causes execution to be suspended when program control reaches a specified instruction address in memory. For example, an instruction breakpoint may be implemented by writing the instruction address to a debug register of CPU 152. When the instruction pointer matches the memory address stored in the debug register, an interrupt is raised. For example, in the case of AES-NI, hypervisor 140 may determine the memory address of a last-round encryption instruction and apply an instruction breakpoint for that address to cause an interrupt to be raised upon CPU 152 reaching that instruction. Upon such interrupt, hypervisor 140 may identify the last-round key and derive all the other round keys and master key.

As another example, hypervisor 140 may update the control registers of CPU 152 to disable support for Streaming SIMD Extension (SSE) instructions running in the guest context. Such SSE instructions may include various encryption instructions. By disabling SSE support at the CPU level, any attempt to execute such instructions by VMs of host 100 in the guest context, triggers an interrupt. In response to any of such interrupts, hypervisor 140 may identify the last-round key and derive all the other round keys and master key.

Using the performance monitoring counter as discussed above, hypervisor 140 may program CPU 152 to raise interrupts in response to every encryption instruction. However, such interrupting may overly slow down benign processes such as guest software 122 and 132. Accordingly, hypervisor 140 may instead program CPU 152 to raise interrupts at a rate such as every 1,000 encryption instructions, e.g., by repeatedly setting the performance monitoring counter to a value that causes it to overflow every 1,000 encryption instructions. In case malware such as ransomware 124 is issuing the encryption instructions, the malware may only occasionally switch which data encryption key it uses for encrypting data. For example, ransomware 124 may use only 1 data encryption key per file (e.g., 1 distinct master key and round keys derived therefrom), so only raising an interrupt once per file may allow for identifying all the data encryption keys used by ransomware 124 for all the files.

Various techniques may be applied for determining a rate to raise interrupts at in response to encryption instructions. Then, a value may be computed that is used for setting the performance monitoring counter after each interrupt, to cause interrupts to be raised at the determined rate. Furthermore, hypervisor 140 may dynamically adjust the rate based on whether different data encryption keys are being used across interrupts. For example, hypervisor 140 may identify the same data encryption key (e.g., same master key) a threshold number of consecutive times, e.g., after 2 or 3 consecutive interrupts. In response, hypervisor 140 may compute a new value for setting the performance monitoring counter to before and after interrupts, to program CPU 152 to raise interrupts at a reduced rate. On the other hand, for example, if hypervisor 140 identifies a different data encryption key every interrupt, hypervisor 140 may leave the current rate intact or compute a new value for setting the performance monitoring counter to after interrupts, to program CPU 152 to raise interrupts at an increased rate.

In some cases, hypervisor 140 may determine the rate based on a size of the buffers in memory 154 used for temporarily storing file data. For example, hypervisor 140 may cause an interrupt to only be raised by CPU 152 once per encryption of a buffer. Such rate may account for ransomware 124 not being expected to change data encryption keys (e.g., change master keys) in the middle of encrypting a buffer. If the size of the buffers is unknown, hypervisor 140 may determine such size in various ways. As just one example, when an interrupt occurs, hypervisor 140 may decode instructions until reaching and identifying a looping instruction responsible for iterating over a memory buffer. Hypervisor 140 may then locate a register of CPU 152 storing a remaining loop iteration count. Hypervisor 140 may determine the size of the memory buffer based on the remaining loop iteration count and on the amount of data encrypted per iteration. Based on the determined size, hypervisor 140 may set the performance monitoring counter to a value that causes the performance monitoring counter to overflow in response to the first encryption instruction for the next memory buffer, i.e., the first encryption instruction after finishing the encryption of the current memory buffer.

Alternatively, hypervisor 140 may program CPU 152 by inserting a data-access breakpoint in memory 154 at the last byte of a memory buffer that is being used for encrypting data, i.e., the byte located at the highest memory address within the memory buffer. A data-access breakpoint, also referred to as a watchpoint, is a type of hardware breakpoint that causes execution to be suspended when a monitored memory address is accessed. A data-access breakpoint may be configured by writing the monitored memory address to a debug register of CPU 152, the type of access (read, write, or both), and a data size (e.g., 1 byte). For example, to calculate the memory address of the last byte of the memory buffer, upon determining the size of the memory buffer, hypervisor 140 may add the determined buffer size to the starting memory address of the memory buffer, i.e., the lowest memory address within the memory buffer.

Each time hypervisor 140 calculates the memory address of the last byte of a memory buffer, hypervisor 140 may apply a data-access breakpoint based on that address. For example, applying each data-access breakpoint may involve writing to the debug register of CPU 152, the calculated memory address, the type of access to include both reads and writes, and the data size to be 1 byte. Then, an interrupt may be raised each time CPU 152 attempts to read or write to that byte of memory. Furthermore, each time such an interrupt is raised, hypervisor 140 may set the performance monitoring counter to a value that causes an additional interrupt to be raised upon reaching the next encryption instruction. In response to such additional interrupts, which are raised at the beginnings of memory buffers, hypervisor 140 may identify the last-round key and derive all the other round keys and master key. Indeed, in many cases, this is a point at which ransomware 124 is especially likely to change data encryption keys.

It should be noted that encryption may be performed concurrently on multiple vCPUs by multiple threads, e.g., of ransomware 124 or guest software 132. Accordingly, hypervisor 140 may manage a plurality of performance monitoring counters, one per vCPU. When an interrupt is raised to pause execution of a particular vCPU based on a performance monitoring counter thereof, the other vCPUs may continue executing uninterrupted with their respective performance monitoring counters.

Furthermore, in some cases, threads may be dynamically scheduled and thus migrate between vCPUs during execution. Additionally, these threads may sometimes share the same vCPU over time, with each thread executing in alternating time slices. To deal with such cases, hypervisor 140 may track context switches, which occur when one thread that is currently executing on a vCPU is paused or preempted, and then another thread is scheduled to resume execution on that same vCPU. For example, in the case of guest software 122 or ransomware 124, hypervisor 140 may place an instruction breakpoint on a code routine of a guest OS of VM 120. Upon reaching such breakpoint for one of vCPU(s) 126, hypervisor 140 may save the current value of the performance monitoring counter being used by that vCPU, which is associated with the thread that is being paused or preempted. Hypervisor 140 may then restore, to the performance monitoring counter being used by that vCPU, a value that is associated with the thread that is scheduled to resume execution.

Alternatively, hypervisor 140 may handle context switches without keeping track of values for performance monitoring counters on a per-thread basis. For example, each time hypervisor 140 intercepts a context switch for a vCPU, hypervisor 140 may set the performance monitoring counter of that vCPU to cause an interrupt to be raised upon the next encryption instruction. Then, upon that interrupt being raised, hypervisor 140 may compute the rate for raising interrupts for that vCPU based on the remaining loop iteration count for the thread that is scheduled to resume execution, as discussed above.

Hypervisor 140 may store intercepted data encryption keys such as master keys, e.g., in storage 156. For example, hypervisor 140 may encrypt those intercepted data encryption keys, e.g., to prevent unauthorized access to those copies. For example, hypervisor 140 may doubly encrypt the intercepted data encryption keys, once using a first public encryption key and then again using another public encryption key. For example, one public encryption key may be provided by a user of VM 120, and the other public encryption key may be provided by a vendor of hypervisor 140 or an administrator of host 100. The intercepted data encryption keys may then only be accessed by decrypting them using private decryption keys associated with the public encryption keys. Public encryption keys and private decryption keys are two parts of asymmetric encryption, whereby different keys are used for encryption and decryption. A public encryption key is available to multiple entities and is used for encryption. A private decryption key is only known by the owner thereof, and is used for decrypting data that was encrypted by the corresponding public encryption key.

It should be noted that to save storage space, hypervisor 140 may only store intercepted data encryption keys for a limited time. For example, hypervisor 140 may periodically delete the oldest intercepted data encryption keys. However, hypervisor 140 may store a large enough quantity of intercepted data encryption keys to avoid deleting any that are currently or have recently been used by malware to encrypt files.

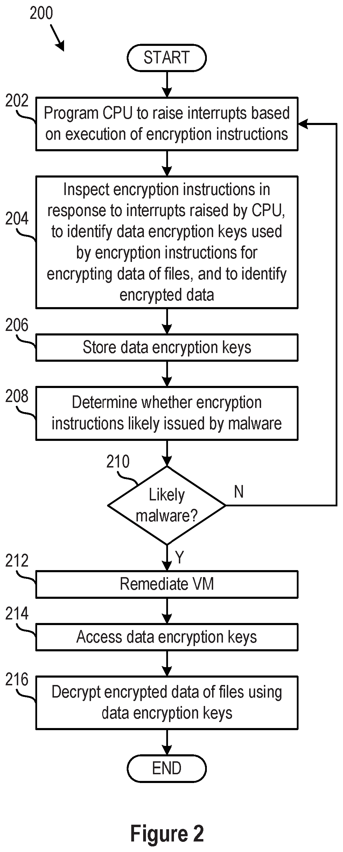

Figure 2 is a flow diagram of a method 200 that may be performed by host 100 to detect and recover from a malware attack such as by ransomware 124, according to some embodiments. At step 202, host 100 programs CPU 152 to raise interrupts based on the execution of encryption instructions. As discussed above, host 100 may program CPU 152 to increment a performance monitoring counter (e.g., per vCPU) and raise an interrupt based on a value thereof. Additionally, each time an interrupt is raised based on the value of the performance monitoring counter, host 100 may insert an instruction breakpoint. Alternatively, host 100 may disable support for SSE instructions running in the guest context. Furthermore, host 100 may program CPU 152 to raise interrupts in response to every encryption instruction or at a determined rate, which may be dynamically adjusted. Host 100 may also insert a data-access breakpoint at the last byte of a memory buffer that is being used for encrypting data and cause an interrupt to be raised upon the next encryption instruction.

At step 204, hypervisor 140 inspects encryption instructions as they are reached during execution, in response to interrupts raised by CPU 152. Such encryption instructions may be benign, e.g., issued by guest software 122. Such encryption instructions may also be malicious, e.g., issued by ransomware 124. As used herein, "inspecting encryption instructions" includes identifying data encryption keys used by the encryption instructions for encrypting file data, and may further include identifying the encrypted file data generated by those encryption instructions. As one example, such inspecting may include reading inputs and output data of the encryption instructions from memory 154 to identify data encryption keys and encrypted file data that are stored in memory 154. As another example, such inspecting may include reading the source and destination operands of the encryption instructions from registers of CPU 152 to identify the data encryption keys and encrypted file data that are stored in the registers.

As mentioned earlier, for example, in the case of AES-NI, hypervisor 140 may identify last-round keys and derive other round keys and master keys therefrom. In some cases, when an interrupt occurs, hypervisor 140 may trace forward through encryption instructions, executing such encryption instructions in the hypervisor context, to the last round of encryption, identify the last-round key, and then perform the transformations. On the other hand, in some cases, hypervisor 140 may decode instructions until reaching and identifying a last-round encryption instruction, insert an instruction breakpoint at a memory address corresponding thereto, and then wait until an interrupt occurs in response to CPU 152 reaching the last-round encryption instruction. Hypervisor 140 may then identify the last-round key and perform the transformations. As used herein, "decoding encryption instructions" refers to analyzing those encryption instructions-potentially before they are reached during execution-to determine their operational meaning, including identifying operations to be performed.

In some cases, to avoid identification of the data encryption keys, ransomware 124 may obfuscate the data encryption keys in its encryption instructions. For example, ransomware 124 may use one or more "wrapping encryption keys" for encrypting the data encryption keys. A wrapping encryption key is a cryptographic key used for encrypting another key. In such case, determining the data encryption keys comprises identifying the wrapping encryption key(s) used to encrypt the data encryption keys. Hypervisor 140 may then decrypt the data encryption keys using the identified wrapping encryption key(s). For example, hypervisor 140 may intercept an instruction from ransomware 124 for encrypting one of the data encryption keys, and hypervisor 140 may identify a wrapping encryption key therefrom.

At step 206, hypervisor 140 stores the identified data encryption keys, e.g., in storage 156. As mentioned earlier, before storing the identified data encryption keys, hypervisor 140 may encrypt them, e.g., once using a public encryption key of a user of VM 120 and once using a public encryption key of a vendor of hypervisor 140 or an administrator of host 100. At step 208, hypervisor 140 determines whether the encryption instructions inspected at step 204 were likely issued by malware. For example, hypervisor 140 may determine that a frequency at which the encryption instructions change data encryption keys exceeds a threshold, which may indicate malicious behavior. If so, hypervisor 140 may determine that the encryption instructions were likely issued by malware. On the other hand, the encryption instructions may use the same data encryption key, or the frequency at which the encryption instructions change data encryption keys may not exceed the threshold. In that case, hypervisor 140 may determine that the encryption instructions were not likely issued by malware.

In addition to making such determination based on the changing of data encryption keys, hypervisor 140 may make such determination based on other factors such as whether encrypted data is subsequently written to storage 156. If, in addition to a frequency of changing data encryption keys indicating malicious behavior, the encrypted data (or a large portion thereof) is written to storage 156, hypervisor 140 may determine that the encryption instructions were likely issued by malware. Otherwise, if encrypted data (or a large portion thereof) is not written to storage 156, hypervisor 140 may determine that the encryption instructions were not likely issued by malware.

Hypervisor 140 may determine whether encrypted data is written to storage 156 by intercepting write operations issued, e.g., by VM 120. Hypervisor 140 may compare the pending data to be written to data generated by encryption instructions inspected at step 204. If hypervisor 140 determines that the pending write data matches data generated by the encryption instructions, hypervisor 140 may determine that encrypted data is being written to storage 156. Otherwise, if hypervisor 140 cannot find any such matches for the pending write data, hypervisor 140 may determine that it is not encrypted data from the encryption instructions that is being written to storage 156.

At step 210, if hypervisor 140 determines that the encryption instructions were not likely issued by malware, method 200 returns to step 202, and host 100 again programs CPU 152 to raise interrupts based on the execution of encryption instructions. Otherwise, if hypervisor 140 determines that the encryption instructions were likely issued by malware, method 200 moves to step 212. At step 212, hypervisor 140 remediates the VM that issued the encryption instructions, e.g., VM 120. For example, hypervisor 140 may disconnect VM 120 from a network and/or reboot VM 120. Additionally, hypervisor 140 may take a "full-memory snapshot" of VM 120, which includes creating a point-in-time copy of the entire memory contents of VM 120 in memory 154. Such copy may include code of ransomware 124. According to non-virtualized examples, an OS may acquire a "core dump" of its kernel or of ransomware 124, a core dump being a snapshot of memory contents, including, e.g., code of ransomware 124.

At step 214, hypervisor 140 accesses the data encryption keys stored at step 206, e.g., from storage 156. As mentioned earlier, for security purposes, the stored data encryption keys may have been encrypted. Accordingly, hypervisor 140 may request for the encrypted data encryption keys to be decrypted using corresponding private decryption keys. For example, one of such private decryption keys may belong to a user of VM 120, and another of such private decryption keys may belong to a vendor of hypervisor 140 or an administrator of host 100.

For example, the private decryption keys may be stored on computers separate from host 100. Accordingly, host 100 may first transmit the data encryption keys to one of the other computers, e.g., of the user of VM 120, which may use a private decryption key to perform a first decryption of the data encryption keys. The other computer may transmit the data encryption keys back to host 100, which may then transmit the data encryption keys to another computer, e.g., of the vendor of hypervisor 140 or administrator of host 100. The other computer may use another private decryption key to perform a second decryption of the data encryption keys and transmit the data encryption keys back to host 100.

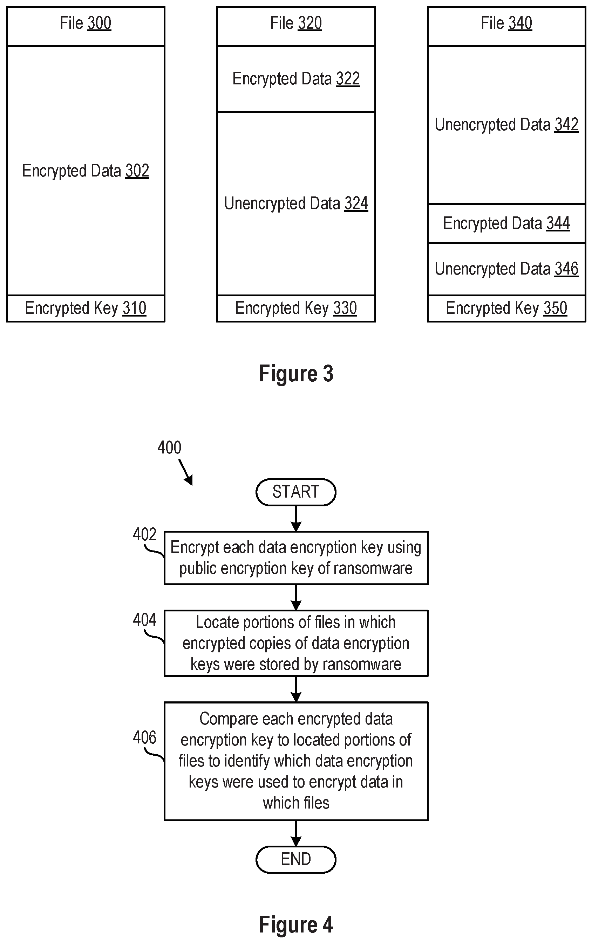

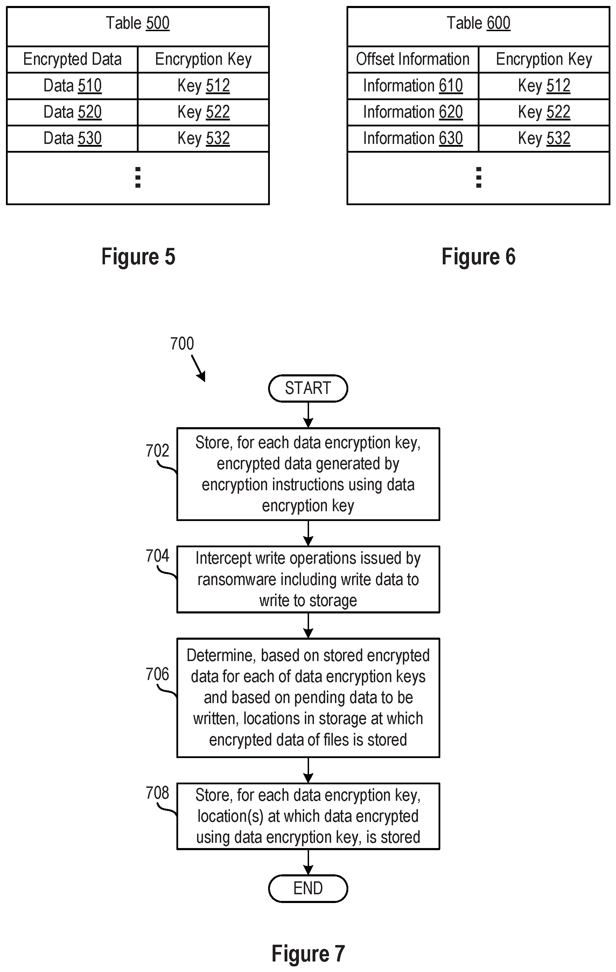

At step 216, hypervisor 140 decrypts the encrypted data of the files using the data encryption keys. If ransomware 124 performed full encryption of files, hypervisor 140 may decrypt the entireties of the files. Otherwise, if ransomware 124 performed partial encryption of the files, hypervisor 140 may decrypt those portions of the files that were encrypted. For example, if ransomware 124 performed AES-NI encryption, hypervisor 124 performs AES-NI decryption to decrypt the encrypted data. Decrypting the files may include matching data encryption keys to their associated encrypted data. One example of such matching is discussed below in conjunction with Figures 3-4. Another example of such matching is discussed below in conjunction with Figures 5-7.

After step 216, method 200 ends. It should be noted that embodiments are not limited to the order illustrated in Figure 2. For example, although host 100 is only illustrated as programming CPU 152 once at step 202 to raise interrupts, as discussed earlier, hypervisor 140 may dynamically adjust the rate at which CPU 152 raises interrupts. It should also be noted that ransomware 124 may transform file data before or after encrypting it in order to make recovery more difficult. Examples of such transformation include performing a bitwise operation on the data such as an exclusive OR (XOR) with a fixed pattern, applying a substitution cipher on the data such as rotate-by-13 (ROT 13), using a combination of the above, etc. If the data was transformed by ransomware 124 before being encrypted, hypervisor 140 may perform a data transformation (reverse transformation) on the decrypted data to undo the transformation performed by ransomware 124. If the data was transformed by ransomware 124 after being encrypted, hypervisor 140 may perform the reverse transformation on the data before decrypting it.

Figure 3 is a block diagram of an example of files that have been encrypted by malware such as ransomware 124. In the example of Figure 3, a file 300 is fully encrypted, including encrypted data 302. Another file 320 is partially encrypted, including encrypted data 322 at the beginning, followed by unencrypted data 324. Another file 340 is partially encrypted, including unencrypted data 342 at the beginning, followed by encrypted data 344 and unencrypted data 346. In the example of Figure 3, ransomware 124 appends, to the end of each file, a data encryption key used for encrypting data of the file.

Furthermore, ransomware 124 encrypts the data encryption keys before appending them to the ends of files, including an encrypted key 310 at the end of file 300, an encrypted key 330 at the end of file 320, and an encrypted key 350 at the end of file 340. For example, ransomware 124 may encrypt each data encryption key using a public encryption key embedded in the code of ransomware 124. Ransomware 124 may append the data encryption keys in this manner so that if a user pays a ransom, ransomware 124 may decrypt the encrypted keys using a private decryption key only known to an author of ransomware 124. Ransomware 124 may then use the data encryption keys to decrypt data. As discussed below in conjunction with Figure 4, such appended encrypted keys may be leveraged by some embodiments.

Figure 4 is a flow diagram of a method 400 that may be performed by host 100 to match file data to data encryption keys used by malware such as ransomware 124, according to some embodiments. At step 402, hypervisor 140 encrypts each data encryption key that was determined by inspecting encryption instructions of ransomware 124. Specifically, hypervisor 140 encrypts each data encryption key using a public encryption key of ransomware 124. For example, as discussed above, hypervisor 140 may take a full-memory snapshot of VM 120. The public encryption key may be located in such full-memory snapshot, e.g., automatically by hypervisor 140 or by a forensic analyst.

At step 404, hypervisor 140 locates portions of files in which encrypted copies of the data encryption keys were stored by ransomware 124. For example, as illustrated in Figure 3, the portions of the files may be at the ends of each of the files in which data was encrypted. It should be noted that there are various approaches for determining where within the files to locate the portions storing the data encryption keys. As just one example, code of ransomware 124 may be inspected in a full-memory snapshot, e.g., automatically by hypervisor 140 or by a forensic analyst. As another example, for a first encrypted file, hypervisor 140 may search the entire file for encrypted versions of data encryption keys, it being expected that within other encrypted files, data encryption keys will be stored at the same position.

At step 406, hypervisor 140 compares each data encryption key encrypted thereby, to the located portions of the files, to identify which data encryption keys were used to encrypt data in which files. Because hypervisor 140 uses the public encryption key of ransomware 124 for encrypting the data encryption keys, matches between encrypted keys indicate matches between data encryption keys. After step 406, method 400 ends.

Method 400 may be used by hypervisor 140 to more efficiently decrypt file data. Without method 400, hypervisor 140 may simply apply data encryption keys to encrypted file data in a brute-force manner. After each attempt to decrypt file data, if a decrypted file includes an expected signature at the start of the file, hypervisor 140 may determine that it used the correct data encryption key. Unfortunately, such brute-forced decryption is time-consuming and may even be impossible if ransomware 124 does not encrypt the starting signatures of files. Method 400, on the other hand, allows for leveraging appended encrypted keys to efficiently match data encryption keys to files. Data may then be decrypted using associated data encryption keys.

As mentioned previously, files may only be partially encrypted. To determine offsets in the files at which ransomware 124 encrypts file data, code of ransomware 124 may be inspected. An "offset" of a file is a location in the file with respect to the beginning of that file. For example, hypervisor 140 or a forensic analyst may inspect such code from a memory snapshot of ransomware 124, which may include an algorithm applied by ransomware 124. Hypervisor 140 may then locate such offsets in the files and decrypt file data thereat.

Figure 5 is an example of a table 500 that may be used by some embodiments to associate data encryption keys with data that has been encrypted by using them. As discussed further below, hypervisor 140 may utilize the information in table 500 to efficiently decrypt data as an alternative to method 400 of Figure 4, e.g., when a public encryption key of ransomware 124 is unavailable or when a forensic analyst is unable to identify an algorithm of ransomware 124 for selecting portions of files to encrypt. As just one example, table 500 may be an associative map in memory 154 or storage 156. An associative map is a data structure that stores key-value pairs, each key being associated with a value.

Table 500 includes a column of encrypted data and a column of data encryption keys. For example, if table 500 is an associative map, the key of each entry may be data encrypted by ransomware 124, and each value may be a data encryption key used for generating the associated encrypted data. In the example of Figure 5, ransomware 124 uses data encryption keys 512, 522, and 532 for generating encrypted data 510, 520, and 530, respectively.

Hypervisor 140 may add an entry to table 500 each time hypervisor 140 emulates a last-round encryption instruction, at which point hypervisor 140 may store the resulting encrypted data in table 500 in association with the data encryption key used to encrypt it. Otherwise, if an encryption instruction has already been performed when an interrupt occurs, hypervisor 140 may check the resulting encrypted data and store it in table 500. Hypervisor 140 may thus continually store associations between data encryption keys and encrypted data as encryption instructions of ransomware 124 are executed.

Figure 6 is an example of a table 600 that may be used by some embodiments to associate data encryption keys with offsets at which encrypted data is stored. As discussed further below, hypervisor 140 may utilize the information in table 600 to efficiently decrypt data as an alternative to method 400 of Figure 4. For example, like table 500, table 600 may be an associative map in memory 154 or storage 156. Items of Figure 6 that are the same or similar to items of Figure 5 include the same reference numbers.

Table 600 includes a column of offset information and a column of data encryption keys. For example, the offset information at each entry of table 600 may include an identifier of a virtual disk and offsets in that virtual disk at which encrypted data is stored, e.g., an offset at which the encrypted data begins and an offset at which the encrypted data ends. For example, if table 600 is an associative map, the key of each entry may be offset information, and each value may be a data encryption key used for generating encrypted data between associated offsets of an associated virtual disk. In the example of Figure 6, ransomware 124 uses data encryption keys 512, 522, and 532 for encrypting data between offsets indicated by offset information 610, 620, and 630, respectively.

Hypervisor 140 may add an entry to table 600 each time hypervisor 140 intercepts a write operation issued by ransomware 124 or by benign software such as guest software 132. Such write operation includes pending data to write to storage 156. Hypervisor 140 may compare encrypted data from table 500 to the pending write data to identify when ransomware 124 or benign software is writing encrypted data to storage 156. Hypervisor 140 may determine, using the write instruction, which virtual disk is being written to and offsets between which the encrypted data is to be written. Hypervisor 140 may then store such offset information in table 600 along with the data encryption key from table 500 associated with the encrypted data. To save space, e.g., in storage 156, hypervisor 140 may delete entries of table 500 as hypervisor 140 stores corresponding entries in table 600 with the same data encryption keys.

Figure 7 is a flow diagram of a method 700 that may be performed by host 100 to determine locations in storage 156 at which encrypted data is stored, according to some embodiments. Method 700 is discussed with respect to ransomware 124 but it should be understood that method 700 may similarly be performed with respect to benign software such as guest software 132. At step 702, hypervisor 140 stores, for each data encryption key determined based on encryption instructions of ransomware 124, encrypted data generated by the encryption instructions using the data encryption key. Hypervisor 140 may store such encrypted data in association with data encryption keys in table 500, as discussed above in conjunction with Figure 5. At step 704, hypervisor 140 intercepts write operations issued by ransomware 124, including pending data to write to storage.

At step 706, hypervisor 140 determines, based on the encrypted data for each of the data encryption keys stored at step 702 and based on the pending write data, locations in storage 156 at which encrypted file data is stored. For each intercepted write operation, if the pending write data matches encrypted data stored at step 702, hypervisor 140 may determine that the encrypted data is stored at the location in storage 156 at which the pending data is to be written. It should be noted that because encrypted data is highly unique, it is extremely unlikely for encrypted data stored at step 702 to match unencrypted data.

At step 708, hypervisor 140 stores, for each data encryption key, one or more locations at which data encrypted using the data encryption key, is stored in storage 156. Hypervisor 140 may store such locations in association with data encryption keys in table 600, as discussed above in conjunction with Figure 6. After step 708, method 700 ends. It should be noted that embodiments are not limited to the order illustrated in Figure 7. For example, although hypervisor 140 is only illustrated as performing each step once, hypervisor 140 may perform many iterations thereof. Hypervisor 140 may perform iterations of step 702 in response to intercepting encryption instructions of ransomware 124. Hypervisor 140 may further perform iterations of steps 704-708 in response to intercepting write operations of ransomware 124.

Method 700 may be used by hypervisor 140 to more efficiently decrypt file data. As discussed above, there may be limitations to hypervisor 140 brute-force using data encryption keys to decrypt files. Method 700 allows for leveraging intercepted write operations to efficiently match data encryption keys to storage locations. Hypervisor 140 may then decrypt data at those locations using associated data encryption keys. It should also be noted that hypervisor 140 may perform method 700 regardless of whether files are fully or partially encrypted. Indeed, the locations in storage 156 may correspond to offsets that encapsulate entire files or to offsets that only encapsulate portions thereof.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host, console, or guest OS that perform virtualization functions.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

## Claims

1. A method of recovering host data encrypted on the host computer by malicious software, the method comprising
programming the processor to raise interrupts based on the execution of encryption instructions;
inspecting encryption instructions of the malicious software in response to a plurality of interrupts raised by the processor, to identify data encryption keys used by the encryption instructions of the malicious software for encrypting the host data; and
decrypting the encrypted host data using the identified data encryption keys.

2. The method of claim 1, wherein
programming the processor to raise interrupts comprises
programming the processor to increment a performance monitoring counter in response to executing encryption instructions, and to raise interrupts based on a value of the performance monitoring counter.

3. The method of claim 2, wherein
a hypervisor executes on the host computer and supports the execution of a virtual machine, VM, in which the encryption instructions of the malicious software are executed, and wherein inspecting the encryption instructions comprises
transferring control of a virtual CPU, vCPU, of the VM from the VM to the hypervisor in response to an interrupt raised based on the value of the performance monitoring counter;
executing a plurality of the encryption instructions of the malicious software in the context of the hypervisor until reaching an instruction used to perform a last round of encryption, and identifying a data encryption key used by the instruction to perform the last round of encryption; and
transferring control of the vCPU from the hypervisor back to the VM.

4. The method of claim 2 or 3, wherein
programming the processor to raise interrupts further comprises
decoding, in response to an interrupt raised based on the value of the performance monitoring counter, a plurality of instructions of the malicious software, to identify an instruction used to perform a last round of encryption; and
inserting an instruction breakpoint at a memory address corresponding to the instruction used to perform the last round of encryption, to program the processor to raise an interrupt in response to reaching the memory address during execution of the encryption instructions of the malicious software;
wherein in particular
inspecting the encryption instructions comprises:
identifying, upon the instruction breakpoint being reached, a data encryption key of the instruction used to perform the last round of encryption.

5. The method of any one of the claims 2 to 4, wherein
programming the processor to raise interrupts further comprises
calculating a memory address of a last byte of a memory buffer used by the malicious software for storing the host data for encrypting, based on a starting memory address of the memory buffer and a size of the memory buffer; and
applying a data-access breakpoint based on the calculated memory address.

6. The method of any one of the claims 1 to 5, further comprising
determining, based on a size of memory buffers used by the malicious software for storing the host data for encrypting, a rate for causing interrupts to be raised by the processor, the processor being programmed to raise interrupts at the determined rate.

7. The method of any one of the claims 1 to 6, further comprising
determining, based on the encryption instructions of the malicious software, that the same one of the identified data encryption keys has been identified a threshold number of consecutive times; and
programming the processor to raise interrupts at a reduced rate based on the same one of the identified data encryption keys being identified the threshold number of consecutive times.

8. The method of any one of the claims 1 to 7, further comprising
before decrypting the encrypted host data, encrypting the identified data encryption keys first using a first public encryption key and then using a second public encryption key;
requesting the identified data encryption keys to be decrypted using a second private decryption key corresponding to the second public encryption key; and
requesting the identified data encryption keys to be decrypted using a first private decryption key corresponding to the first public encryption key.

9. The method of any one of the claims 1 to 8, wherein identifying the data encryption keys comprises
identifying at least one wrapping encryption key used by the malicious software for encrypting the identified data encryption keys; and
decrypting the identified data encryption keys using the at least one wrapping encryption key.

10. The method of any one of the claims 1 to 9, further comprising
determining that the encrypted host data is written to storage of the host computer and that a frequency of changing data encryption keys when encrypting the host data exceeds a threshold, the encrypted host data further being decrypted based on the encrypted host data being written to the storage and the frequency exceeding the threshold.

11. The method of any one of the claims 1 to 10, wherein the host data includes a plurality of files and wherein the method further comprises
locating portions of the files in which encrypted copies of the identified data encryption keys were stored by the malicious software; and
identifying, for each of the files, which of the identified data encryption keys was used to encrypt data in the file by encrypting the data encryption key using a public encryption key of the malicious software and comparing the encrypted data encryption key to the located portion of the file.

12. The method of any one of the claims 1 to 11, wherein
the encrypted host data was transformed by the malicious software before or after being encrypted, and the method further comprises
if the host data was transformed before being encrypted, performing an inverse data transformation on the decrypted host data; and
if the host data was transformed after being encrypted, performing the inverse data transformation on the host data before decrypting the host data.

13. The method of any one of the claims 1 to 12, further comprising
storing, for each of the identified data encryption keys, encrypted data generated by the encryption instructions of the malicious software using the identified data encryption key;
intercepting write operations issued by the malicious software, the write operations including pending data to write to storage of the host computer; and
determining, based on the stored encrypted data for each of the identified data encryption keys and based on the pending data, locations in the storage at which the encrypted host data is stored.

14. A host computer including a processor and memory, wherein the processor executes instructions stored in the memory to recover host data encrypted on the host computer by malicious software, by performing a method as set forth in any one of the preceding method claims.

15. A non-transitory, computer-readable medium comprising instructions that are executable in a host computer, wherein the instructions when executed cause the host computer to carry out a method as set forth in any one of the preceding method claims.
